# EUROPEAN PATENT APPLICATION

(11) **EP 4 679 597 A1**
(43) Date of publication of application: **14.01.2026**
(21) Application number: 24806053.5
(22) Date of filing: 08.01.2024
(51) Int. Cl.: H01M 50/242

(54) **BATTERY CELL, BATTERY AND ELECTRIC DEVICE**

(30) Priority: 16.05.2023 CN 202310548691
(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN); YE, Yonghuang, Ningde, Fujian 352100 (CN)
(74) Representative: Kraus & Lederer PartGmbB
(86) International application number: PCT/CN2024/071151
(87) International publication number: WO 2024/234689

(57) **Abstract**

The present application discloses a battery cell, a battery, and an electric apparatus. The battery cell includes: a housing; at least one electrode assembly, the electrode assembly being disposed within the housing; at least one elastic buffer pad, the elastic buffer pad including an elastic buffer layer and a support layer disposed on at least one side of the elastic buffer layer, the support layer being configured to support the elastic buffer layer; the elastic buffer pad being disposed between the electrode assembly and the housing, and/or between two adjacent electrode assemblies.

## Description

### TECHNICAL FIELD

The present application relates to the field of battery technology, and more particularly, to a battery cell, a battery, and an electric apparatus.

### BACKGROUND

Lithium-ion batteries are characterized by being green, environmentally friendly, high-energy, and low-carbon. They are not only applied in energy storage power systems such as hydroelectric, thermal, wind, and solar power plants but are also widely used in electric vehicles such as electric bicycles, electric motorcycles, and electric cars, as well as in military equipment, aerospace, and various other fields. With the development of modern society, the requirements for lithium-ion batteries are increasingly stringent.

### DISCLOSURE

In view of the technical problems existing in the background, the present application provides a battery cell aimed at suppressing the issue of reduced buffering capacity of a buffer pad during battery production.

To achieve the above objective, a first aspect of the present application provides a battery cell, including:
a housing;
at least one electrode assembly, the electrode assembly being disposed within the housing; and
at least one elastic buffer pad, the elastic buffer pad including an elastic buffer layer and a support layer disposed on at least one side of the elastic buffer layer, the support layer being configured to support the elastic buffer layer; and the elastic buffer pad being disposed between the electrode assembly and the housing, and/or between two adjacent electrode assemblies.

The battery cell of the first aspect of the present application has at least the following beneficial effects: using the support layer composited with the elastic buffer layer can provide support to the elastic buffer layer, not only suppressing thermal shrinkage of the elastic buffer layer (such as thermal shrinkage during a vacuum baking process), optionally using the support layer to suppress thermal shrinkage of the elastic buffer layer in a two-dimensional direction perpendicular to its thickness direction, thereby alleviating the issue of losing its original function due to thermal shrinkage, while also alleviating the issue of material damage due to mechanical stress in the later stages of battery use. Furthermore, placing the elastic buffer pad inside the battery cell is conducive to further improving the volume stability of the battery during long-term use, enhancing long-term performance.

In some embodiments of the present application, under a same pressure, a compression rate of the elastic buffer layer is greater than a compression rate of the support layer. This allows the elastic buffer layer to primarily mitigate volume changes of the battery cell, while enabling the support layer to provide good support to the elastic buffer layer.

In some embodiments of the present application, a porosity of the elastic buffer layer is greater than a porosity of the support layer. This, on one hand, enables the support layer to have a smaller compression rate than the elastic buffer layer under the same pressure conditions, providing good support to the elastic buffer layer, and on the other hand, can limit excessive embedding of the elastic buffer layer into the pore structure of the support layer, which is conducive to maintaining the structural stability of the elastic buffer pad.

In some embodiments of the present application, an elastic modulus of the elastic buffer layer is less than an elastic modulus of the support layer. This enables the support layer to have relatively good rigidity, thereby providing good support to the elastic buffer layer, facilitating the suppression of thermal shrinkage of the elastic buffer layer during the vacuum baking process, alleviating the issue of losing its original function due to thermal shrinkage, and alleviating the issue of material damage due to mechanical stress in the later stages of battery use.

In some embodiments of the present application, the compression rate of the elastic buffer layer under 1 MPa pressure is 50% to 90%, optionally 60% to 80%; and the compression rate of the support layer under 1 MPa pressure is less than or equal to 5%.

In some embodiments of the present application, the compression rate of the elastic buffer layer under 3 MPa pressure is 60% to 95%, optionally 80% to 95%; and the compression rate of the support layer under 3 MPa pressure is less than or equal to 8%.

In some embodiments of the present application, the porosity of the elastic buffer layer is 40% to 95%, optionally 55% to 90%, and further optionally 70% to 85%.

In some embodiments of the present application, the porosity of the support layer is less than or equal to 5%.

In some embodiments of the present application, the elastic buffer layer includes at least one of foamed polyethylene, polypropylene, polyurethane, and silicone rubber; and/or, the support layer includes at least one of high-density polyethylene, polyacrylate, polyethylene terephthalate, and polytetrafluoroethylene.

In some embodiments of the present application, at least one elastic buffer pad includes one elastic buffer layer and one support layer. Controlling the elastic buffer pad to have this structure enables the elastic buffer pad to have good compressibility and resilience in its thickness direction, effectively suppressing volume changes of the battery cell, while also being conducive to reducing its thickness, thereby reducing the potential negative impact on the energy density of the battery cell.

In some embodiments of the present application, at least one elastic buffer pad includes one elastic buffer layer and two support layers, the elastic buffer layer being sandwiched between the two support layers. Controlling the elastic buffer pad to have this structure enables the elastic buffer pad to have good compressibility and resilience in its thickness direction, effectively suppressing volume changes of the battery cell, while also further alleviating the issue of the elastic buffer layer losing its original function due to thermal shrinkage during the vacuum baking process and the issue of material damage due to mechanical stress in the later stages of battery use.

In some embodiments of the present application, a thickness of the elastic buffer layer is greater than a thickness of the support layer. This can balance the compressible deformation amount of the elastic buffer pad and the overall thickness of the elastic buffer pad, which is conducive to maintaining the volume stability of the battery cell, while also reducing the potential negative impact of the elastic buffer pad on the energy density of the battery cell.

In some embodiments of the present application, in a single elastic buffer pad, a ratio of a total thickness of the support layer to a free thickness of the elastic buffer layer is 0.005 to 0.1, optionally 0.02 to 0.05. This enables the support layer to provide good support to the elastic buffer layer, while also balancing the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, the free thickness of the elastic buffer layer is 0.2 mm to 10 mm, and a thickness of a single support layer is 30 µm to 200 µm. This enables the support layer to provide good support to the elastic buffer layer, while also balancing the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, a free thickness of a single elastic buffer pad is 2% to 15% of a thickness of a single electrode assembly, optionally 5% to 10% of the thickness of the single electrode assembly. This can balance the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, a sum of thicknesses of all the electrode assemblies and free thicknesses of all the elastic buffer pads is 96% to 105% of a thickness of an inner cavity of the housing, optionally 98% to 103% of the thickness of the inner cavity of the housing. This can reduce the difficulty of inserting the electrode assemblies and the elastic buffer pads into the housing, while also balancing the high energy density of the battery cell and the stability of the electrode assemblies within the housing.

In some embodiments of the present application, the elastic buffer layer is adhesively connected to the support layer. This can provide good support and fixation to the elastic buffer layer. Satisfying this condition is conducive to further suppressing thermal shrinkage of the elastic buffer layer during the vacuum baking process, alleviating the issue of losing its original function due to thermal shrinkage, while also alleviating the issue of material damage due to mechanical stress in the later stages of battery use.

In some embodiments of the present application, an interlayer peel strength between the elastic buffer layer and the support layer is greater than or equal to 10 N/15 mm, optionally greater than or equal to 20 N/15 mm. Satisfying this condition can further enable the support layer to provide good support to the elastic buffer layer, which is conducive to suppressing thermal shrinkage of the elastic buffer layer during the vacuum baking process, alleviating the issue of losing its original function due to thermal shrinkage, while also alleviating the issue of material damage due to mechanical stress in the later stages of battery use.

In some embodiments of the present application, a tensile strength of the support layer is greater than or equal to 20 MPa, optionally greater than or equal to 50 MPa. This can further enable the support layer to provide good support to the elastic buffer layer.

In some embodiments of the present application, in the elastic buffer pad disposed between the electrode assembly and the housing, a thermal conductivity of the elastic buffer layer and/or the support layer is greater than or equal to 10 W/(m·°C), optionally greater than or equal to 20 W/(m·°C). Satisfying this condition can increase the thermal conductivity of the buffer pad, reducing heat accumulation inside the battery cell.

In some embodiments of the present application, in the elastic buffer pad disposed between two adjacent electrode assemblies, the thermal conductivity of the elastic buffer layer and/or the support layer is less than or equal to 0.1 W/(m·°C), optionally less than or equal to 0.05 W/(m·°C). Satisfying this condition can enhance the thermal insulation capability of the buffer pad, preventing the failure of one electrode assembly from causing the failure of other electrode assemblies.

In some embodiments of the present application, the elastic buffer pad is disposed between two adjacent electrode assemblies. This can not only prevent the electrode plates in the middle region of two adjacent electrode assemblies from experiencing significant compression, avoiding lithium precipitation issues and battery performance degradation caused thereby, but also facilitate contact between the electrode assembly and the housing, enhancing the heat dissipation capability of the battery cell.

In some embodiments of the present application, the housing is a prismatic housing, and the electrode assembly is a wound electrode assembly. This can effectively alleviate the issue of uneven stress on the electrode plates in prismatic wound batteries, improving the stability of the battery cell.

A second aspect of the present application provides a battery, including: the battery cell according to the first aspect of the present application.

A third aspect of the present application provides an electric apparatus, including: the battery according to the second aspect of the present application.

### BRIEF DESCRIPTION OF DRAWINGS

The above and/or additional aspects and advantages of the present application will become apparent and readily understood from the description of embodiments in conjunction with the following drawings, where:
FIG. 1 is a schematic structural diagram of a battery cell according to an embodiment of the present application.
FIG. 2 is a schematic structural diagram of a battery cell according to another embodiment of the present application.
FIG. 3 is a schematic structural diagram of an elastic buffer pad according to an embodiment of the present application.
FIG. 4 is a schematic structural diagram of an elastic buffer pad according to another embodiment of the present application.
FIG. 5 is a schematic structural diagram of a battery cell according to yet another embodiment of the present application.
FIG. 6 is a schematic structural diagram of a battery module according to an embodiment of the present application.
FIG. 7 is a schematic structural diagram of a battery pack according to an embodiment of the present application.
FIG. 8 is an exploded view of a battery pack according to an embodiment of the present application.
FIG. 9 is a schematic diagram of an embodiment of an electric apparatus using a battery as a power source according to an embodiment of the present application.

Reference signs:
1 - battery cell; 10 - housing; 20 - electrode assembly; 30 - elastic buffer pad; 31 - elastic buffer layer; 32 - support layer; 2 - battery module; 3 - battery pack; 4 - upper case; 5 - lower case.

### DESCRIPTION OF EMBODIMENTS

The present application is further described in conjunction with specific embodiments. It should be understood that these specific embodiments are only used to illustrate the present application and are not intended to limit the scope of the present application.

The term "embodiment" mentioned in the present application means that a particular feature, structure, or characteristic described in connection with the embodiment may be included in at least one embodiment of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described in the present application may be combined with other embodiments.

The "ranges" disclosed in the present application are defined in the form of lower and/or upper limits, and a given range is defined by selecting a lower limit and/or an upper limit, where the selected lower limit and/or upper limit define the boundaries of a particular range. Ranges defined in this manner may include or exclude the endpoints and may be arbitrarily combined, meaning that any lower limit may be combined with any upper limit to form a range not explicitly described, and any lower limit may be combined with any other lower limit to form a range not explicitly described, and similarly, any upper limit may be combined with any other upper limit to form a range not explicitly described. Additionally, each individually disclosed point or single numerical value may itself serve as a lower or upper limit to be combined with any other point or single numerical value or with other lower or upper limits to form a range not explicitly described.

Unless otherwise specified, all embodiments and optional embodiments of the present application may be combined with each other to form new technical solutions, and such technical solutions should be considered included in the disclosure of the present application.

Unless otherwise specified, all technical features and optional technical features of the present application may be combined with each other to form new technical solutions, and such technical solutions should be considered included in the disclosure of the present application.

Unless otherwise specified, the terms "include" and "comprise" mentioned in the present application denote an open-ended inclusion, but may also be closed-ended. For example, "include" and "comprise" may indicate that other components not listed may also be included or comprised, or only the listed components may be included or comprised. Additionally, in the present application, the terms "plurality" or "multiple" refer to two or more.

Unless otherwise specified, in the present application, the term "and/or" is merely an associative relationship describing associated objects, indicating that three relationships may exist, for example, A and/or B may indicate: A exists alone, A and B exist simultaneously, and B exists alone. Additionally, the character "/" in this document generally indicates that the associated objects before and after it are in an "or" relationship.

Unless otherwise defined, all technical and scientific terms used in the present application have the same meanings as commonly understood by those skilled in the technical field of the present application; the terms used in the present application are only for the purpose of describing specific embodiments and are not intended to limit the present application; the terms "include" and "have" in the specification and claims of the present application, as well as any variations thereof, are intended to cover non-exclusive inclusion. Unless otherwise specified, the terms used in the present application have the commonly understood meanings by those skilled in the art. Unless otherwise specified, the values of the parameters mentioned in the present application may be measured using various measurement methods commonly used in the art (for example, they may be tested according to the methods provided in the embodiments of the present application).

With the rapid development of new energy, the application of lithium-ion batteries is becoming increasingly widespread. Lithium-ion batteries undergo volume changes during charge-discharge cycles, overcharging, and other processes, and as the operating time increases, the expansion amount gradually increases. This not only easily leads to deformation of the battery housing under compressive forces, affecting the volume stability of the battery, but also, if the electrode plates expand excessively during charge-discharge cycles, may affect the spacing between the electrode plates and the separator, increasing the risk of lithium precipitation and affecting the service life of the battery. To address this issue, current solutions include placing buffer pads between battery cells or within battery cells. However, existing built-in buffer pads use foamed materials with numerous micropores, and the battery cell production process requires a vacuum baking process (that is, vacuum baking process, used to control the moisture content of the battery cell, performed under negative pressure to lower the boiling point and promote moisture evaporation), which causes the buffer pad to shrink, losing its intended function.

To alleviate the thermal shrinkage of the buffer pad during the vacuum baking process, an auxiliary structure may be used to support and fix the elastic buffer structure layer. For example, a support layer may be provided on at least one side of the elastic buffer structure layer in the thickness direction to support the elastic buffer structure layer, thereby limiting the thermal shrinkage of the elastic buffer structure layer, for example, limiting its thermal shrinkage in a direction perpendicular to its thickness direction, and thus alleviating the issue of the elastic buffer structure layer losing its original function due to thermal shrinkage during the vacuum baking process.

The battery cell and battery disclosed in the embodiments of the present application may be used in an electric apparatus using a battery as a power source or in various energy storage systems using a battery as an energy storage element. The electric apparatus may include, but is not limited to, mobile phones, tablets, laptops, electric toys, electric tools, electric bicycles, electric vehicles, ships, spacecraft, and the like. Electric toys may include fixed or mobile electric toys, such as game consoles, electric car toys, electric ship toys, and electric airplane toys, and spacecraft may include airplanes, rockets, space shuttles, and spaceships, among others.

A first aspect of the present application provides a battery cell, including: a housing; at least one electrode assembly, the electrode assembly being disposed within the housing; and at least one elastic buffer pad, the elastic buffer pad including an elastic buffer layer and a support layer disposed on at least one side of the elastic buffer layer, the support layer being configured to support the elastic buffer layer; and the elastic buffer pad being disposed between the electrode assembly and the housing, and/or between two adjacent electrode assemblies.

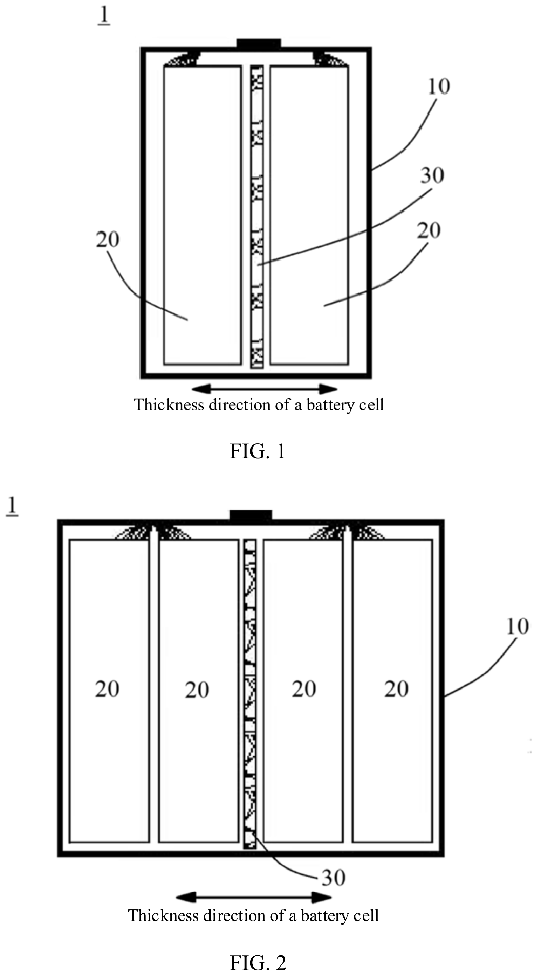

Referring to FIGs. 1-4, the battery cell 1 of the first aspect of the present application includes a housing 10, at least one electrode assembly 20, and at least one elastic buffer pad 30, the electrode assembly 20 being disposed within the housing 10; the elastic buffer pad 30 including an elastic buffer layer 31 and a support layer 32 disposed on at least one side of the elastic buffer layer 31, the support layer 32 being configured to support the elastic buffer layer 31; and the elastic buffer pad 30 being disposed between the electrode assembly 20 and the housing 10 (for example, it may be disposed in at least one of the regions between the electrode assembly 20 and a sidewall of the housing 10, between the electrode assembly 20 and a bottom wall of the housing 10, or between the electrode assembly 20 and a top wall of the housing 10; optionally, the elastic buffer pad 30 may be disposed between the electrode assembly 20 and the sidewall of the housing 10), and/or between two adjacent electrode assemblies 20. It can be understood that the support layer 32 may be disposed on at least one of the six surfaces of the elastic buffer layer 31, for example, the support layer may be disposed on all six surfaces, or may be disposed on at least one of the two sides of the elastic buffer layer 31 along its thickness direction. Optionally, the support layer 32 may be disposed on at least one of the two sides of the elastic buffer layer along its thickness direction. In actual operation, both sides of the elastic buffer pad 30 along its thickness direction may be in contact with the electrode assembly 20, or one side may be in contact with the electrode assembly 20 while the other side may be in contact with the housing 10. The support layer 32 is configured to fix and support the elastic buffer layer 31, capable of limiting deformation of the elastic buffer layer 31 in a direction perpendicular to its thickness direction, with the deformation resistance of the support layer 32 being superior to that of the elastic buffer layer 31. As some specific embodiments, when the battery cell 1 includes only one electrode assembly 20, the elastic buffer pad 30 is disposed between the electrode assembly 20 and the housing 10, with one side of the elastic buffer pad 30 along its thickness direction being in contact with the electrode assembly 20 and the other side being in contact with an inner wall of the housing 10 (such as the inner surface of the sidewall); as other specific embodiments, when the battery cell 1 includes at least two electrode assemblies 20, the number of elastic buffer pads 30 may be one or more, and the one or more elastic buffer pads 30 may be disposed only between the electrode assemblies 20, or only between the electrode assemblies 20 and the housing 10, or partially between the electrode assemblies 20 and partially between the electrode assemblies 20 and the housing 10. As some specific examples, the elastic buffer pads 30 disposed between the electrode assemblies 20 and the housing 10 may also be partially disposed between the electrode assemblies 20 and the sidewall of the housing 10, and partially between the electrode assemblies 20 and the bottom and/or top wall of the housing 10, optionally between the electrode assemblies 20 and the sidewall of the housing 10. As some specific examples, referring to FIGs. 1 and 2, when the battery cell 1 includes at least two electrode assemblies 20 and one elastic buffer pad 30, in the thickness direction of the battery cell 1, the elastic buffer pad 30 may be disposed between two electrode assemblies 20 located in the middle of the battery cell 1, with the thickness direction of the elastic buffer pad 30 being the same as the thickness direction of the battery cell 1, optionally the same as the thickness direction of the battery cell 1 and the electrode assemblies 20.

The battery cell of the first aspect of the present application has at least the following beneficial effects: using the support layer composited with the elastic buffer layer can provide support to the elastic buffer layer, not only suppressing thermal shrinkage of the elastic buffer layer (such as thermal shrinkage during a vacuum baking process), optionally using the support layer to suppress thermal shrinkage of the elastic buffer layer in a two-dimensional direction perpendicular to its thickness direction, thereby alleviating the issue of losing its original function due to thermal shrinkage, while also alleviating the issue of material damage due to mechanical stress in the later stages of battery use. Furthermore, placing the elastic buffer pad inside the battery cell is conducive to further improving the volume stability of the battery during long-term use, enhancing long-term performance.

It can be understood that, in the embodiments of the present application, the battery cell includes, but is not limited to, electrode assemblies and elastic buffer pads, for example, the battery cell may also include an electrolyte; in the embodiments of the present application, the battery cell includes, but is not limited to, secondary battery cells, primary battery cells, and the like; in the embodiments of the present application, the battery cell includes, but is not limited to, lithium-ion battery cells, sodium-ion battery cells, magnesium-ion battery cells, and the like; in the embodiments of the present application, the battery cell includes, but is not limited to, hard-shell battery cells, soft-pack battery cells, and the like, with hard-shell battery cells including, but not limited to, metal-shell battery cells and the like; and in the embodiments of the present application, the battery cell includes, but is not limited to, flat shapes, cuboid shapes, or other shapes.

Further, the battery cell of the first aspect of the present application, while satisfying the above conditions, may further control the compression rate, porosity, material, thickness, and the like of the elastic buffer layer and the support layer to further improve the performance of the battery cell. That is, while satisfying the above conditions, it may optionally satisfy one or more of the following conditions.

In some embodiments of the present application, optionally, an elastic modulus of the elastic buffer layer 31 is less than an elastic modulus of the support layer 32.

In the present application, the elastic modulus refers to the stress required to produce a unit elastic deformation of the elastic buffer layer or the support layer under external force, with a larger value indicating that greater stress is needed to cause a certain elastic deformation of the elastic buffer layer or the support layer, meaning greater rigidity of the elastic buffer layer or the support layer, and thus less elastic deformation under a certain stress. The elastic modulus of the elastic buffer layer and the support layer is mainly determined by their materials, and when comparing the elastic modulus of the elastic buffer layer and the support layer, the comparison may be based on their materials, or on the stress required to produce the same amount of elastic deformation under the same conditions, or on the amount of elastic deformation under the same stress.

By controlling the elastic modulus of the elastic buffer layer to be less than the elastic modulus of the support layer, the support layer can have relatively good rigidity, thereby providing good support to the elastic buffer layer, facilitating the suppression of thermal shrinkage of the elastic buffer layer during the vacuum baking process, alleviating the issue of losing its original function due to thermal shrinkage, and alleviating the issue of material damage due to mechanical stress in the later stages of battery use.

In some embodiments of the present application, optionally, under a same pressure, a compression rate of the elastic buffer layer 31 is greater than a compression rate of the support layer 32.

In the present application, let the free volume of the elastic buffer layer or the support layer be V₁, and the volume of the elastic buffer layer or the support layer under a certain compressive stress be V₂, the compression rate of the elastic buffer layer or the support layer refers to the compressive deformation amount (V₂-V₁)/free volume V₁ × 100% under a certain compressive stress. Considering that the elastic buffer pad primarily undergoes compressive deformation in the thickness direction when subjected to compressive stress, with relatively small compressive deformation in the two-dimensional plane perpendicular to the thickness direction, when comparing the compression rates of the elastic buffer layer and the support layer under the same pressure, the comparison may be characterized by the ratio of their volume compressive deformation to their free volume, or by the ratio of their thickness change to their free thickness, that is, let the free thickness of the elastic buffer layer or the support layer be d₁', and the thickness of the elastic buffer layer or the support layer under a certain compressive stress be d₂', the compression rate of the elastic buffer layer and the support layer under the same pressure may be estimated using (d₂'-d₁')/d₁' × 100%. The free volume of the elastic buffer layer or the support layer refers to the volume of the elastic buffer layer or the support layer when the elastic buffer pad is not subjected to any external force, and the free thickness of the elastic buffer layer or the support layer refers to the thickness of the elastic buffer layer or the support layer when the elastic buffer pad is not subjected to any external force. When the elastic buffer pad 30 is placed between the electrode assemblies 20 or between the electrode assembly 20 and the housing 10, its two sides along the thickness direction are disposed opposite to the surface of the electrode assembly or the inner wall of the housing. When the electrode assembly expands, the elastic buffer pad is subjected to compressive stress along its thickness direction, causing the elastic buffer layer to contract and reduce in thickness, while the support layer is primarily used to support the elastic buffer layer, limiting its deformation in the direction perpendicular to the thickness direction.

By controlling the compression rate of the elastic buffer layer 31 to be greater than the compression rate of the support layer 32 under the same pressure, the elastic buffer layer can primarily mitigate volume changes of the battery cell, while enabling the support layer to provide good support to the elastic buffer layer.

In some embodiments of the present application, the compression rate of the elastic buffer layer 31 under 1 MPa pressure may be 50% to 90%, optionally 60% to 80%; and the compression rate of the support layer 32 under 1 MPa pressure may be less than or equal to 5%.

For example, the compression rate of the elastic buffer layer 31 under 1 MPa pressure may be 50%, 55%, 60%, 65%, 70%, 75%, 80%, 85%, 90%, or the like, or may be a range composed of any of the above values; further, the compression rate of the elastic buffer layer 31 under 1 MPa pressure may be 60% to 80%. The compression rate of the support layer 32 under 1 MPa pressure may be 0%, 1%, 2%, 3%, 4%, 5%, or the like, or may be a range composed of any of the above values. When the compression rate of the elastic buffer layer under 1 MPa pressure is too low, the effect of mitigating volume changes of the battery cell is not significant, and when the compression rate of the elastic buffer layer under 1 MPa pressure is too high, it may affect the resilience of the elastic buffer layer. When the compression rate of the support layer under 1 MPa pressure is too high, it may negatively impact the support effect on the elastic buffer layer. As described above, the compression rates of the elastic buffer layer and the support layer under 1 MPa pressure may be obtained by placing the elastic buffer pad in a press and applying a compressive stress of 1 MPa, measuring and calculating the ratio of the volume compressive deformation to the free volume under 1 MPa compressive stress, or estimating by measuring and calculating the ratio of the thickness change to the free thickness under 1 MPa compressive stress.

By controlling the compression rates of the elastic buffer layer and the support layer under 1 MPa pressure to satisfy the given range, the elastic buffer layer can effectively mitigate volume changes of the battery cell, while allowing the support layer to provide good support to the elastic buffer layer.

In some embodiments of the present application, the compression rate of the elastic buffer layer 31 under 3 MPa pressure may be 60% to 95%, optionally 80% to 95%; and the compression rate of the support layer 32 under 3 MPa pressure may be less than or equal to 8%.

For example, the compression rate of the elastic buffer layer 31 under 3 MPa pressure may be 65%, 70%, 75%, 80%, 85%, 90%, or the like, or may be a range composed of any of the above values; further, the compression rate of the elastic buffer layer 31 under 3 MPa pressure may be 80% to 95%. The compression rate of the support layer 32 under 3 MPa pressure may be 0%, 1%, 2%, 3%, 4%, 5%, 6%, 7%, 8%, or the like, or may be a range composed of any of the above values. The compression rates of the elastic buffer layer and the support layer under 3 MPa pressure may be measured as described above. Optionally, the compression rate of the elastic buffer layer 31 under 1 MPa pressure may be 50% to 90%, optionally 60% to 80%, and under 3 MPa pressure may be 60% to 95%, optionally 80% to 95%; the compression rate of the support layer 32 under 1 MPa pressure may be less than or equal to 5%, and under 3 MPa pressure may be less than or equal to 8%.

By controlling the compression rates of the elastic buffer layer and the support layer under 3 MPa pressure to satisfy the given range, the elastic buffer layer can effectively mitigate volume changes of the battery cell, while allowing the support layer to provide good support to the elastic buffer layer.

In some embodiments of the present application, a porosity of the elastic buffer layer 31 may be greater than a porosity of the support layer 32.

The specific sheet structure of the elastic buffer layer 31 is not particularly limited and may include, but is not limited to, a porous elastic layer structure. When the elastic buffer layer 31 is a porous structure, its porosity may be greater than the porosity of the support layer 32, where the support layer 32 may be either a solid layer structure or a sheet structure with lower porosity.

By controlling the porosity of the elastic buffer layer to be greater than the porosity of the support layer, on one hand, it enables the support layer to have a smaller compression rate than the elastic buffer layer under the same pressure conditions, providing good support to the elastic buffer layer, and on the other hand, it can limit excessive embedding of the elastic buffer layer into the pore structure of the support layer, which is conducive to maintaining the structural stability of the elastic buffer pad.

In some embodiments of the present application, the porosity of the elastic buffer layer 31 may be 40% to 95%, optionally 55% to 90%, and further optionally 70% to 85%.

For example, the porosity of the elastic buffer layer 31 may be 40%, 45%, 50%, 55%, 60%, 65%, 70%, 75%, 80%, 85%, 90%, 95%, or the like, or may be a range composed of any of the above values. Increasing the porosity of the elastic buffer layer is conducive to improving the compression rate of the elastic buffer layer under compressive stress, but when the porosity is too high, it may affect the resilience of the elastic buffer layer. Optionally, the porosity of the elastic buffer layer 31 may be 55% to 90%, and further optionally 70% to 85%.

By controlling the porosity of the elastic buffer layer within the given range, the elastic buffer layer can have good compressibility and resilience, effectively suppressing volume changes of the battery cell.

In some embodiments of the present application, the porosity of the support layer 32 may be less than or equal to 5%.

For example, the porosity of the support layer 32 may be 0%, 1%, 2%, 3%, 4%, 5%, or the like, or may be a range composed of any of the above values. Optionally, the porosity of the support layer 32 may be controlled to be less than or equal to 3%.

By controlling the porosity of the support layer within the given range, it is not only conducive to providing good support to the elastic buffer layer but also limits excessive embedding of the elastic buffer layer into the support layer, which is conducive to maintaining the structural stability of the elastic buffer pad.

In some embodiments of the present application, the elastic buffer layer 31 may include at least one of foamed polyethylene, polypropylene, polyurethane, and silicone rubber.

The elastic buffer layer 31 may select materials with good compressibility and resilience, including but not limited to materials within the given range. For example, the elastic buffer layer 31 may include, but is not limited to, polypropylene, and when it includes only polypropylene, the polypropylene may be a modified polypropylene elastomer material, for example, modified by adding polyethylene or rubber components. Optionally, the elastic buffer layer 31 may be a silicone rubber layer. Further optionally, the elastic buffer layer 31 may be a porous structure layer, for example, a foamed polyethylene layer, a foamed polyurethane layer, or the like.

By controlling the elastic buffer layer to be a material within the given range, the elastic buffer layer can have good compressibility and resilience, effectively suppressing volume changes of the battery cell.

In some embodiments of the present application, the support layer 32 may include at least one of high-density polyethylene, polymethyl methacrylate, polyethylene terephthalate, and polytetrafluoroethylene.

The support layer 32 may select materials with high hardness or tensile strength, including but not limited to materials within the given range. As some specific examples, the support layer 32 may be a high-density polyethylene layer, a polymethyl methacrylate layer, or a polyethylene terephthalate layer, or the like.

By controlling the support layer to be a material within the given range, the support layer can have relatively high hardness or tensile strength, providing good support to the elastic buffer layer, which is conducive to maintaining the structural stability of the elastic buffer pad.

In some embodiments of the present application, at least one elastic buffer pad 30 may include one elastic buffer layer 31 and one support layer 32.

The number of elastic buffer layers 31 and support layers 32 in the elastic buffer pad 30 is not particularly limited; for example, the elastic buffer pad 30 may have a double-layer structure including one elastic buffer layer 31 and one support layer 32, or a three-layer structure including one elastic buffer layer 31 and two support layers 32, or a four-layer structure including two elastic buffer layers 31 and two support layers 32, and so on, with the elastic buffer layers 31 and support layers 32 in the multilayer structure of the elastic buffer pad 30 being alternately stacked along their thickness direction. Optionally, the total number of elastic buffer layers 31 and support layers 32 in the elastic buffer pad 30 may be less than or equal to 3, thereby enabling the elastic buffer pad to effectively suppress volume changes of the battery cell while reducing the potential negative impact on the energy density of the battery cell due to an overly thick elastic buffer pad. As some specific embodiments, a single battery cell may include one or more elastic buffer pads 30, with at least one of the one or more elastic buffer pads 30 having a double-layer structure including one elastic buffer layer 31 and one support layer 32.

By controlling at least one elastic buffer pad in the battery cell to include one elastic buffer layer and one support layer, it enables the elastic buffer pad to have good compressibility and resilience in its thickness direction, effectively suppressing volume changes of the battery cell, while also being conducive to reducing its thickness, thereby reducing the potential negative impact on the energy density of the battery cell.

In some embodiments of the present application, at least one elastic buffer pad 30 includes one elastic buffer layer 31 and two support layers 32, the elastic buffer layer 31 being sandwiched between the two support layers 32.

A single battery cell 1 may include one or more elastic buffer pads 30, with at least one of the one or more elastic buffer pads 30 having a three-layer structure including one elastic buffer layer 31 and two support layers 32, where the elastic buffer layer 31 may be sandwiched between the two support layers 32. Adopting this arrangement enables the two support layers to provide bidirectional support to the elastic buffer layer simultaneously, further limiting thermal shrinkage of the elastic buffer layer during the vacuum baking process, particularly in the two-dimensional direction perpendicular to its thickness direction, and deformation of the elastic buffer layer in the two-dimensional direction perpendicular to its thickness direction during the battery cell's usage cycle, which is conducive to maintaining the structural stability of the elastic buffer pad.

By controlling at least one elastic buffer pad in the battery cell to have a three-layer structure with the elastic buffer layer sandwiched between two support layers, it enables the elastic buffer pad to have good compressibility and resilience in its thickness direction, effectively suppressing volume changes of the battery cell, while also further alleviating the issue of the elastic buffer layer losing its original function due to thermal shrinkage during the vacuum baking process and the issue of material damage due to mechanical stress in the later stages of battery use.

In some embodiments of the present application, a thickness of the elastic buffer layer 31 may be greater than a thickness of the support layer 32.

In the present application, the thickness of the elastic buffer layer 31 and the thickness of the support layer 32 both refer to the free thickness, that is, the thickness of the elastic buffer layer 31 and the support layer 32 when the elastic buffer pad 30 is not subjected to external force. A larger thickness of the elastic buffer layer 31 is conducive to increasing the compressible deformation amount of the elastic buffer pad, thereby suppressing volume changes of the battery cell. The support layer 32 is configured to support the elastic buffer layer 31, with its hardness or tensile strength being higher than that of the elastic buffer layer 31, and selecting a thinner thickness is conducive to reducing the potential negative impact of the elastic buffer pad on the energy density of the battery cell.

By controlling the thickness of the elastic buffer layer to be greater than the thickness of the support layer, it can balance the compressible deformation amount of the elastic buffer pad and the overall thickness of the elastic buffer pad, which is conducive to maintaining the volume stability of the battery cell, while also reducing the potential negative impact of the elastic buffer pad on the energy density of the battery cell.

In some embodiments of the present application, in a single elastic buffer pad 30, a ratio of a total thickness of the support layer 32 to a free thickness of the elastic buffer layer 31 may be 0.005 to 0.1, optionally 0.02 to 0.05.

For example, in a single elastic buffer pad, the ratio of the total thickness of the support layer 32 to the free thickness of the elastic buffer layer 31 may be 0.005, 0.01, 0.02, 0.03, 0.04, 0.05, 0.06, 0.07, 0.08, 0.09, 0.1, or the like, or may be a range composed of any of the above values; further, the ratio of the total thickness of the support layer 32 to the free thickness of the elastic buffer layer 31 may be 0.02 to 0.05. As some specific examples, when a single elastic buffer pad 30 includes only one support layer 32 and one elastic buffer layer 31, the ratio of the thickness of the support layer 32 to the free thickness of the elastic buffer layer 31 may be 0.005 to 0.1; as other specific examples, when a single elastic buffer pad 30 includes two support layers 32 and one elastic buffer layer 31, the ratio of the total thickness of the two support layers 32 to the free thickness of the single elastic buffer layer 31 may be 0.005 to 0.1. If the thickness proportion of the support layer in the elastic buffer pad is too small, it is difficult to ensure the support effect on the elastic buffer layer, while if the thickness proportion of the support layer is too large, it may affect the compressible deformation capability of the elastic buffer pad in its thickness direction.

By controlling the thicknesses of the support layer and the elastic buffer layer in a single elastic buffer pad to satisfy the given conditions, it enables the support layer to provide good support to the elastic buffer layer, while also balancing the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, the free thickness of the elastic buffer layer 31 may be 0.2 mm to 10 mm, and a thickness of a single support layer 32 may be 30 µm to 200 µm.

For example, the free thickness of the elastic buffer layer 31 may be 0.2 mm, 0.5 mm, 1 mm, 2 mm, 3 mm, 4 mm, 5 mm, 6 mm, 7 mm, 8 mm, 9 mm, 10 mm, or the like, or may be a range composed of any of the above values. The thickness of a single support layer 32 may be 30 µm, 50 µm, 70 µm, 90 µm, 110 µm, 130 µm, 150 µm, 170 µm, 190 µm, 200 µm, or the like, or may be a range composed of any of the above values. The free thickness of the elastic buffer layer refers to the thickness of the elastic buffer layer when the elastic buffer pad is not subjected to any external force. The free thickness of the elastic buffer layer and the thickness of the support layer may be measured using a micrometer or a vernier caliper, for example, using a Mitutoyo ID-C112MX micrometer thickness gauge or a similar instrument.

By controlling the thicknesses of the support layer and the elastic buffer layer in the elastic buffer pad to satisfy the given conditions, it enables the support layer to provide good support to the elastic buffer layer, while also balancing the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, a free thickness of a single elastic buffer pad 30 is 2% to 15% of a thickness of a single electrode assembly 20, optionally 5% to 10% of the thickness of a single electrode assembly 20.

For example, the free thickness of a single elastic buffer pad 30 may be 2%, 4%, 6%, 8%, 10%, 12%, 14%, 15%, or the like of the thickness of a single electrode assembly, or may be a range composed of any of the above values. Optionally, the free thickness of a single elastic buffer pad 30 may be 5% to 10% of the thickness of a single electrode assembly 20. The free thickness of the elastic buffer pad has been described in detail in the preceding sections and will not be repeated herein. If the free thickness of the elastic buffer pad 30 is too small, its ability to absorb the expansion of the electrode assembly is limited, which is not conducive to maintaining the volume stability of the battery cell during its usage cycle, especially in the later stages. If the free thickness of the elastic buffer pad 30 is too large, it may affect the energy density of the battery cell. The free thickness of the elastic buffer pad may be measured using a Mitutoyo ID-C112MX micrometer thickness gauge or a similar instrument; in the embodiments of the present application, the thickness of the electrode assembly is measured when the state of charge is at 90%, and it may be measured using a Yinghaoda PPG1200 battery thickness tester, with a test pressure of 400 g.

By controlling the free thickness of a single elastic buffer pad within the given range, it can balance the compressible deformation amount of the elastic buffer pad and the overall thickness of the elastic buffer pad, which is conducive to maintaining the volume stability of the battery cell and reducing the potential negative impact of the elastic buffer pad on the energy density of the battery cell.

In some embodiments of the present application, a sum of thicknesses of all the electrode assemblies 20 and free thicknesses of all the elastic buffer pads 30 may be 96% to 105% of a thickness of an inner cavity of the housing 10, optionally 98% to 103% of the thickness of the inner cavity of the housing 10.

For example, the sum of the thicknesses of all the electrode assemblies 20 and the free thicknesses of all the elastic buffer pads 30 may be 96%, 97%, 98%, 99%, 100%, 101%, 102%, 103%, 104%, 105%, or the like of the thickness of the inner cavity of the housing 10, or may be a range composed of any of the above values. Specifically, when the battery cell 1 includes m electrode assemblies 20 and n elastic buffer pads 30, the sum of the total thickness of the m electrode assemblies 20 and the total free thickness of the n elastic buffer pads 30 may be 96% to 105% of the thickness of the inner cavity of the housing 10, where m and n may each independently be a positive integer. As a specific example, when the battery cell includes two electrode assemblies and one elastic buffer pad, the sum of the thicknesses of the two electrode assemblies and the free thickness of the one elastic buffer pad may be 96% to 105% of the thickness of the inner cavity of the housing, optionally 98% to 103% of the thickness of the inner cavity of the housing. Based on the thickness of the inner cavity of the housing, if the sum of the thicknesses of all the electrode assemblies and the free thicknesses of all the elastic buffer pads 30 is too small, it is not conducive to improving the energy density of the battery cell, nor to the stability of the electrode assemblies within the housing. If the sum of the thicknesses of all the electrode assemblies and the free thicknesses of all the elastic buffer pads 30 is too large, it reduces the spacing between the electrode assemblies and/or the elastic buffer pads and the inner wall of the battery housing during assembly, making it difficult to insert the electrode assemblies and the elastic buffer pads into the housing.

By controlling the thicknesses of the electrode assemblies, the elastic buffer pads, and the inner cavity of the housing in the battery cell to satisfy the given conditions, it can reduce the difficulty of inserting the electrode assemblies and the elastic buffer pads into the housing, while also balancing the high energy density of the battery cell and the stability of the electrode assemblies within the housing.

In some embodiments of the present application, the elastic buffer layer 31 may be adhesively connected to the support layer 32.

The connection method between the elastic buffer layer 31 and the support layer 32 is not particularly limited, as long as the support layer can provide good support to the elastic buffer layer and limit the deformation of the elastic buffer layer in the two-dimensional plane perpendicular to its thickness direction. For example, as some specific embodiments, the elastic buffer layer 31 and the support layer 32 may be adhesively connected, and the adhesive used for this adhesive connection may include, but is not limited to, polyvinylidene fluoride, or the like.

By adhesively connecting the elastic buffer layer to the support layer, it can provide good support and fixation to the elastic buffer layer, effectively suppressing thermal shrinkage of the elastic buffer layer during the vacuum baking process, particularly in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, an interlayer peel strength between the elastic buffer layer 31 and the support layer 32 may be greater than or equal to 10 N/15 mm, optionally greater than or equal to 20 N/15 mm.

For example, the interlayer peel strength between the elastic buffer layer 31 and the support layer 32 may be greater than or equal to 10 N/15 mm, greater than or equal to 15 N/15 mm, greater than or equal to 20 N/15 mm, greater than or equal to 25 N/15 mm, greater than or equal to 30 N/15 mm, greater than or equal to 35 N/15 mm, or the like. If the interlayer peel strength between the elastic buffer layer and the support layer is too low, it may affect the ability of the support layer to suppress deformation of the elastic buffer layer in the two-dimensional direction perpendicular to its thickness direction. The interlayer peel strength between the elastic buffer layer 31 and the support layer 32 may be measured with reference to GB/T 8808-1988, with a sample width of 15 mm.

By controlling the interlayer peel strength between the elastic buffer layer and the support layer to satisfy the given range, it is conducive to further suppressing thermal shrinkage of the elastic buffer layer during the vacuum baking process, particularly in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, a tensile strength of the support layer 32 may be greater than or equal to 20 MPa, optionally greater than or equal to 50 MPa.

For example, the tensile strength of the support layer 32 may be greater than or equal to 20 MPa, greater than or equal to 40 MPa, greater than or equal to 50 MPa, greater than or equal to 60 MPa, greater than or equal to 800 MPa, greater than or equal to 100 MPa, or the like. Increasing the tensile strength of the support layer is conducive to further reducing its compression rate under external force, providing good support to the elastic buffer layer. The tensile strength of the support layer may be measured with reference to GB/T 1040.1-2018.

By controlling the tensile strength of the support layer to satisfy the given range, it can further enable the support layer to provide good support to the elastic buffer layer, which is conducive to suppressing thermal shrinkage of the elastic buffer layer during the vacuum baking process, particularly in the two-dimensional direction perpendicular to its thickness direction, alleviating the issue of losing its original function due to thermal shrinkage, while also alleviating the issue of material damage due to mechanical stress in the later stages of battery use.

In some embodiments of the present application, in the elastic buffer pad 30 disposed between the electrode assembly 20 and the housing 10, a thermal conductivity of the elastic buffer layer 31 and/or the support layer 32 may be greater than or equal to 10 W/(m·°C),optionally greater than or equal to 20 W/(m·°C).

For example, the thermal conductivity of at least one of the elastic buffer layer 31 and the support layer 32 may be greater than or equal to 10 W/(m·°C),greater than or equal to 12 W/(m·°C),greater than or equal to 15 W/(m·°C),greater than or equal to 18 W/(m·°C), greater than or equal to 20 W/(m·°C), greater than or equal to 25 W/(m·°C),greater than or equal to 30 W/(m·°C),greater than or equal to 35 W/(m·°C), or the like. As some specific examples, the thermal conductivity of both the elastic buffer layer 31 and the support layer 32 may be greater than or equal to 10 W/(m·°C), for example, greater than or equal to 20 W/(m·°C). A higher thermal conductivity is conducive to quickly transferring heat from inside the battery cell, improving the heat dissipation effect of the battery cell. The thermal conductivity of the elastic buffer layer and the support layer may be measured with reference to GB/T 10295.

By controlling the thermal conductivity of the elastic buffer layer and/or the support layer in the elastic buffer pad disposed between the electrode assembly and the housing to satisfy the given range conditions, it can increase the thermal conductivity of the buffer pad, reducing heat accumulation inside the battery cell.

In some embodiments of the present application, in the elastic buffer pad 30 disposed between two adjacent electrode assemblies 20, the thermal conductivity of the elastic buffer layer 31 and/or the support layer 32 may be less than or equal to 0.1 W/(m·°C), optionally less than or equal to 0.05 W/(m·°C).

For example, the thermal conductivity of at least one of the elastic buffer layer 31 and the support layer 32 may be less than or equal to 0.1 W/(m·°C), less than or equal to 0.05 W/(m·°C), less than or equal to 0.01 W/(m·°C), less than or equal to 0.005 W/(m·°C), or the like. As some specific examples, the thermal conductivity of both the elastic buffer layer 31 and the support layer 32 may be less than or equal to 0.1 W/(m·°C), for example, less than or equal to 0.05 W/(m·°C). A lower thermal conductivity is conducive to insulating heat conduction between battery assemblies, preventing the failure of one electrode assembly from causing the failure of other electrode assemblies. The thermal conductivity of the elastic buffer layer and the support layer may be measured with reference to GB/T 10295.

By controlling the thermal conductivity of the elastic buffer layer and/or the support layer in the elastic buffer pad disposed between two adjacent electrode assemblies to satisfy the given range conditions, it can enhance the thermal insulation capability of the buffer pad, preventing the failure of one electrode assembly from causing the failure of other electrode assemblies, reducing the probability of thermal runaway in the battery cell.

In some embodiments of the present application, the elastic buffer pad 31 may be disposed between two adjacent electrode assemblies 20.

The middle part of a battery cell is often the part that experiences the most severe swelling and the greatest expansion force during use. By disposing the elastic buffer pad 30 between two adjacent electrode assemblies 20, it can alleviate the expansion force of this part of the electrode assemblies, while also facilitating contact between the electrode assemblies and the inner wall of the housing, improving the heat conduction effect.

By disposing the elastic buffer pad between two adjacent electrode assemblies, it can not only prevent the electrode plates in the middle region of two adjacent electrode assemblies from experiencing significant compression, avoiding lithium precipitation issues and battery performance degradation caused thereby, but also facilitate contact between the electrode assembly and the housing, enhancing the heat dissipation capability of the battery cell.

In some embodiments of the present application, the housing 10 may be a prismatic housing, and the electrode assembly 20 may be a wound electrode assembly.

For wound electrode assemblies, there is an issue of uneven stress on the electrode plates in a prismatic housing. By incorporating elastic buffer pads between electrode assemblies or between the electrode assembly and the housing, this issue can be effectively alleviated.

By combining a prismatic housing, a wound electrode assembly, and an elastic buffer pad, it can alleviate the issue of uneven stress on the electrode plates in prismatic wound batteries, improving the stability of the battery cell.

In some embodiments of the present application, the electrode assembly may include a positive electrode plate, a negative electrode plate, and a separator, the positive electrode plate, the negative electrode plate, and the separator being formed into the electrode assembly through a winding process. During the charging and discharging process of the battery, active ions intercalate and deintercalate back and forth between the positive electrode plate and the negative electrode plate. The separator is disposed between the positive electrode plate and the negative electrode plate to provide isolation.

### [Positive Electrode Plate]

In the battery, the positive electrode plate typically includes a positive electrode current collector and a positive electrode active material layer disposed on the positive electrode current collector, the positive electrode active material layer including a positive electrode active material. The positive electrode current collector may use a conventional metal foil or a composite current collector (for example, a metal material may be disposed on a polymer substrate to form a composite current collector). As an example, the positive electrode current collector may use aluminum foil.

In the present application, the specific type of positive electrode active material is not limited and may use active materials known in the art for battery positive electrodes, which those skilled in the art may flexibly select based on actual needs. For example, the positive electrode active material may include, but is not limited to, lithium transition metal oxides and/or lithium-containing phosphates with an olivine structure. The lithium transition metal oxides may include undoped and/or optionally doped modified lithium transition metal oxides, uncoated and/or coated modified lithium transition metal oxides. The lithium-containing phosphates with an olivine structure may include undoped and/or optionally doped modified lithium-containing phosphates with an olivine structure, uncoated and/or coated modified lithium-containing phosphates with an olivine structure. Positive electrode active materials within the given range may be obtained through preparation or commercial channels.

In some specific embodiments of the present application, the positive electrode active material layer may optionally further include a binder, a conductive agent, and other optional additives. As an example, the conductive agent may include, but is not limited to, one or more of superconducting carbon, acetylene black, carbon black, Ketjen black, carbon dots, carbon nanotubes, Super P (SP), graphene, and carbon nanofibers. As an example, the binder may include, but is not limited to, one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

### [Negative Electrode Plate]

In the battery, the negative electrode plate typically includes a negative electrode current collector and a negative electrode active material layer disposed on the negative electrode current collector, the negative electrode active material layer including a negative electrode active material. The negative electrode current collector may use a conventional metal foil or a composite current collector (for example, a metal material may be disposed on a polymer substrate to form a composite current collector). As an example, the negative electrode current collector may use copper foil.

In some embodiments of the present application, the battery cell of the first aspect of the present application may be a lithium-ion battery cell, and in this case, the specific type of negative electrode active material is not limited and may use active materials known in the art for battery negative electrodes, which those skilled in the art may flexibly select based on actual needs. As an example, the negative electrode active material may include, but is not limited to, one or more of artificial graphite, natural graphite, hard carbon, soft carbon, silicon-based materials, and tin-based materials. Optionally, the silicon-based materials may include one or more of elemental silicon, silicon-oxygen compounds (for example, silicon monoxide), silicon-carbon composites, silicon-nitrogen composites, and silicon alloys. Further optionally, the tin-based materials may include one or more of elemental tin, tin-oxygen compounds, and tin alloys. Negative electrode active materials within the given range may be obtained through preparation or commercial channels.

In some specific embodiments of the present application, the negative electrode active material layer may optionally further include a binder, a conductive agent, and other optional additives. As an example, the conductive agent may include, but is not limited to, one or more of superconducting carbon, acetylene black, carbon black, Ketjen black, carbon dots, carbon nanotubes, graphene, and carbon nanofibers. As an example, the binder may include, but is not limited to, one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyvinyl alcohol (PVA), and polyvinyl butyral (PVB). As an example, other optional additives may include, but are not limited to, thickeners and dispersants (for example, sodium carboxymethyl cellulose CMC-Na), and PTC thermistor materials.

In some embodiments of the present application, the separator in the battery may include, but is not limited to, a polyethylene porous membrane, a polypropylene porous membrane, a polyimide porous membrane, and a porous membrane formed by a composite of multiple polymers.

A second aspect of the present application provides a battery, including: the battery cell according to the first aspect of the present application. Optionally, the battery may be a secondary battery, for example, the battery may be a lithium-ion secondary battery or the like.

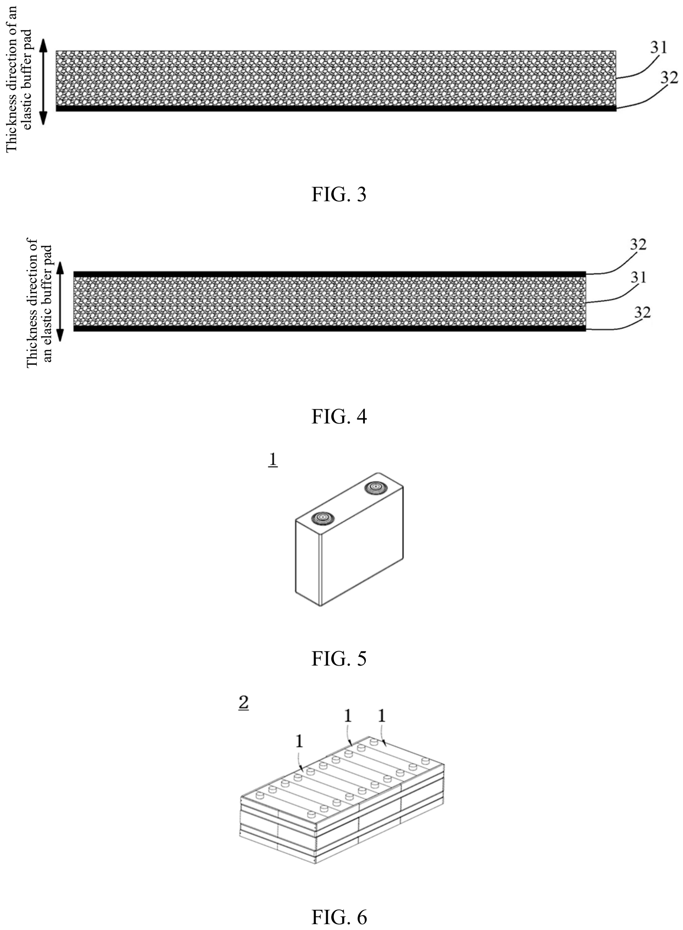

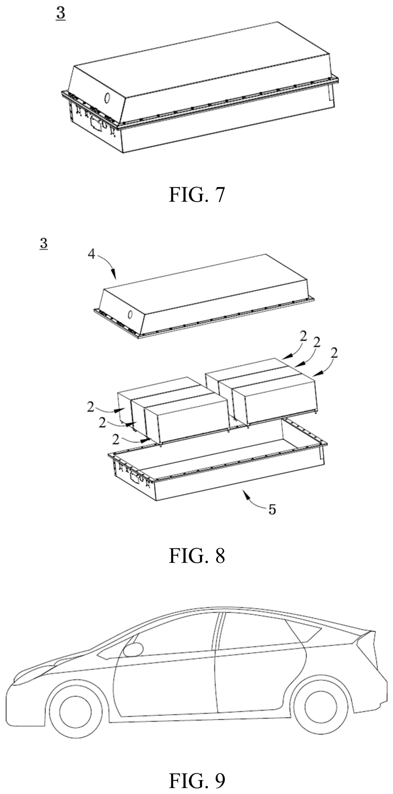

In some embodiments of the present application, the battery may be a battery cell 1 (referring to FIG. 5), or a battery module 2 composed of battery cells 1 (referring to FIG. 6), or a battery pack 3 (referring to FIG. 7).

In some embodiments, the battery may be a battery module, and the number of battery cells included in the battery module may be one or more, with the specific number adjustable according to the application and capacity of the battery module. FIG. 6 is a battery module 2 as an example. Referring to FIG. 6, in the battery module 2, a plurality of battery cells 1 may be arranged sequentially along the length direction of the battery module 2. Of course, they may also be arranged in any other manner. Further, the plurality of battery cells 1 may be fixed by fasteners. Optionally, the battery module 2 may also include a casing with an accommodating space, and the plurality of battery cells 1 are accommodated in the accommodating space.

In some embodiments, the above battery module may also be assembled into a battery pack, and the number of battery modules included in the battery pack may be adjusted according to the application and capacity of the battery pack. Referring to FIG. 7 or FIG. 8 (FIG. 7 and FIG. 8 are a battery pack 3 as an example), the battery pack 3 may include a battery case and a plurality of battery modules 2 disposed in the battery case. The battery case may include an upper case 4 and a lower case 5, the upper case 4 being capable of covering the lower case 5 to form a sealed space for accommodating the battery modules 2. The plurality of battery modules 2 may be arranged in any manner in the battery case.

Additionally, the present application provides an electric apparatus, including: the battery according to the second aspect of the present application. The battery, such as a battery cell, battery module, or battery pack, may serve as a power source for the electric apparatus or as an energy storage unit for the electric apparatus. The electric apparatus may include, but is not limited to, mobile devices (for example, mobile phones and laptops), electric vehicles (for example, pure electric vehicles, hybrid electric vehicles, plug-in hybrid electric vehicles, electric bicycles, electric scooters, electric golf carts, electric trucks, and the like), electric trains, ships, satellites, and energy storage systems. Referring to FIG. 9, as a specific example, the electric apparatus may be a vehicle. The electric apparatus may select the specific type of battery based on its usage requirements, such as a battery cell, battery module, or battery pack.

As an example, the electric apparatus may be a pure electric vehicle, a hybrid electric vehicle, or a plug-in hybrid electric vehicle. To meet the high power and high energy density requirements of the electric apparatus for the battery, a battery pack or a battery module may be used.

As another example, the electric apparatus may be a mobile phone, a tablet, or a laptop. Such electric apparatuses typically require lightweight and thin designs, and a battery cell may be used as the power source.

The following describes examples of the present application. The examples described below are exemplary and are used only to explain the present application and should not be construed as limiting the present application. For examples where specific techniques or conditions are not specified, they are performed in accordance with techniques or conditions described in the literature in the field or in accordance with product specifications. Reagents or instruments used without specifying the manufacturer are conventional products commercially available.

### Example 1

### (I) Preparation of lithium secondary battery

### (1) Preparation of positive electrode plate

The positive electrode active material LiNi_{0.6}Co_{0.1}Mn_{0.3}O₂, conductive agent Super P, and binder PVDF were mixed at a weight ratio of 93:4:3, the solvent N-methylpyrrolidone was added, and the mixture was thoroughly stirred to form a uniform positive electrode slurry. The slurry was then coated on both surfaces of a positive electrode current collector aluminum foil, with a coating thickness of 90 µm on each side of the aluminum foil and a coating areal density of 20 mg/cm² on each side. After drying and cold pressing, a positive electrode plate with a total thickness of 130 µm was obtained.

### (2) Preparation of negative electrode plate

The negative electrode active material artificial graphite, conductive agent Super P, binder styrene-butadiene rubber, and thickener sodium carboxymethyl cellulose were mixed at a weight ratio of 95:1:2:2, solvent deionized water was added, and the mixture was thoroughly stirred to form a uniform negative electrode slurry. The slurry was then coated on both surfaces of a negative electrode current collector copper foil, with a coating thickness of 80 µm on each side of the copper foil and a coating areal density of 11 mg/cm² on each side. After drying and cold pressing, a negative electrode plate with a total thickness of 127 µm was obtained.

### (3) Preparation of electrolyte

In an argon atmosphere glove box with a water content <10 ppm, solvents EC (ethylene carbonate), PC (propylene carbonate), and DMC (dimethyl carbonate) were mixed in a 1:1:1 ratio, and then fully dried lithium salt LiPF₆ was dissolved in the mixed organic solvent. After stirring uniformly, an electrolyte was obtained, with a LiPF₆ concentration of 1 mol/L.

### (4) Preparation of separator

A polyethylene porous membrane was used as the separator.

### (5) Preparation of elastic buffer pad

A foamed polyethylene layer with a free thickness of 2 mm was used as the elastic buffer layer, and a polymethyl methacrylate layer with a thickness of 0.04 mm was used as the support layer. One side of the elastic buffer layer in the thickness direction was adhesively bonded to one support layer to obtain an elastic buffer pad with a double-layer structure.

### (6) Preparation of lithium secondary battery

The positive electrode plate, separator, and negative electrode plate were stacked in order, with the separator positioned between the positive and negative electrode plates for isolation, and wound to form an electrode assembly. Two electrode assemblies and the elastic buffer pad were placed in an outer package, with one layer of the elastic buffer pad sandwiched between the two electrode assemblies. The prepared electrolyte was injected, and the package was sealed to obtain a lithium-ion secondary battery.

### Examples 2 to 8

The differences between Examples 2 to 8 and Example 1 are detailed in Table 1. In Examples 1 to 8, the thickness of a single electrode assembly is the same, and in Examples 1, 3, 5, 7, and 8, the thickness of the elastic buffer layer in the prepared elastic buffer pad is the same. In Examples 5 and 6, the elastic buffer pad has two support layers, prepared by adhesively bonding one support layer to each side of the elastic buffer layer in the thickness direction, resulting in an elastic buffer pad with a three-layer structure, with the thicknesses of the two support layers being the same.

### Examples 9 to 15

The difference between Example 9 and Example 1 lies in: (5) Preparation of elastic buffer pad: A foamed polyethylene layer with a thickness of 2 mm was used as the elastic buffer layer, and a polymethyl methacrylate layer with a thickness of 0.04 mm was used as the support layer. One side of the elastic buffer layer in the thickness direction was adhesively bonded to one support layer to obtain an elastic buffer pad with a double-layer structure, where the porosity of the elastic buffer layer was 45%, and the porosity of the support layer was 1%.

The differences between Examples 10 to 15 and Example 1 are detailed in Table 2.

In Examples 9 to 15, the thickness of a single electrode assembly is the same, and in Examples 9, 11, and 13 to 15, the thickness of the elastic buffer layer in the prepared elastic buffer pad is the same.

### Examples 16 to 34

The difference between Example 16 and Example 1 lies in: (5) Preparation of elastic buffer pad: A foamed polyethylene layer with a thickness of 2 mm was used as the elastic buffer layer, and a polymethyl methacrylate layer with a thickness of 0.04 mm was used as the support layer. One side of the elastic buffer layer in the thickness direction was adhesively bonded to one support layer to obtain an elastic buffer pad with a double-layer structure, where the porosity of the elastic buffer layer was 60%, the porosity of the support layer was 1%, and the tensile strength of the support layer was 60 MPa.

The differences between Examples 17 to 34 and Example 16 are detailed in Table 3.

In Examples 16 to 34, the thickness of a single electrode assembly is the same, and in Examples 16 to 22 and Examples 29 to 34, the thickness of the elastic buffer layer in the prepared elastic buffer pad is the same. In Examples 29 to 31, the tensile strength was varied by changing the porosity of the support layer; and in Examples 32 to 34, the interlayer peel strength between the elastic buffer layer and the support layer was varied by changing the thickness of the adhesive layer.

### Comparative Example 1

The difference between Comparative Example 1 and Example 16 lies in: The elastic buffer pad contains only an elastic buffer layer and no support layer, as detailed in Table 3.

### (II) Battery testing methods

### (a) Testing cycle stability of the battery

The lithium-ion battery was rested at 25°C for 5 minutes, then charged at a constant current of 0.5C to 4.4V, followed by constant voltage charging at 4.4V until the current reached 0.05C, and rested for 5 minutes. Three positions on the lithium-ion battery were identified, and the thicknesses at these positions were measured, with the average recorded as d₀. The lithium-ion battery was then discharged at a constant current of 0.33C to 2.8V and rested for 5 minutes. The above charge-discharge cycle was repeated n times, and the thicknesses at the three positions on the lithium-ion battery, dₙ, were measured each time, with the average taken. The battery thickness growth rate was calculated using the following formula: Battery thickness growth rate after n cycles (%) = (dₙ - d₀)/d₀ × 100%. The number of cycles corresponding to a battery thickness growth rate of 10% was recorded.

### (b) Testing the shrinkage rate of the elastic buffer layer in the two-dimensional direction

The shrinkage rate of the elastic buffer layer in the length direction of the elastic buffer pad was taken as the shrinkage rate in the two-dimensional direction. The length of the elastic buffer layer, L₀, was measured before assembling the secondary battery, with at least three measurements taken and averaged. After the battery thickness growth rate reached 10%, the battery was disassembled, and the length of the elastic buffer layer, Lₙ, was measured again, with at least three measurements taken and averaged. The shrinkage rate of the elastic buffer layer in the two-dimensional direction when the battery thickness growth rate was 10% was calculated using the following formula: Shrinkage rate of the elastic buffer layer in the two-dimensional direction (%) = (Lₙ - L₀)/L₀ × 100%.

### (c) Testing whether the elastic buffer layer is damaged

The surface condition of the elastic buffer layer was observed before assembling the secondary battery. After the battery thickness growth rate reached 10%, the battery was disassembled, and the surface condition of the elastic buffer layer was observed again to compare whether the elastic buffer layer was damaged before and after use.

### (d) Estimating the compression rate of the elastic buffer layer and the support layer

The free thickness of the elastic buffer layer/support layer, d₁', was measured using a vernier caliper, with at least three measurements taken and averaged. The elastic buffer layer/support layer was placed between two parallel metal plates, a specific compressive stress was applied for 1 minute, and the thickness of the elastic buffer layer/support layer, d₂', was measured using a vernier caliper, with at least three measurements taken and averaged. The compression rate of the elastic buffer layer/support layer was calculated using the following formula: Compression rate of the elastic buffer layer/support layer (%) = (d₂' - d₁')/d₁' × 100%.

### (e) Testing the porosity of the elastic buffer layer and the support layer

The porosity was tested with reference to GB/T 24586-2009.

### (f) Tensile strength of the support layer

The tensile strength was tested with reference to GB/T 1040.1-2018.

### (g) Interlayer peel strength between the elastic buffer layer and the support layer

The interlayer peel strength was tested with reference to GB/T 8808-1988.

Relevant tests were conducted on Examples 1 to 34 and Comparative Example 1, with test results detailed in Tables 1 to 3.

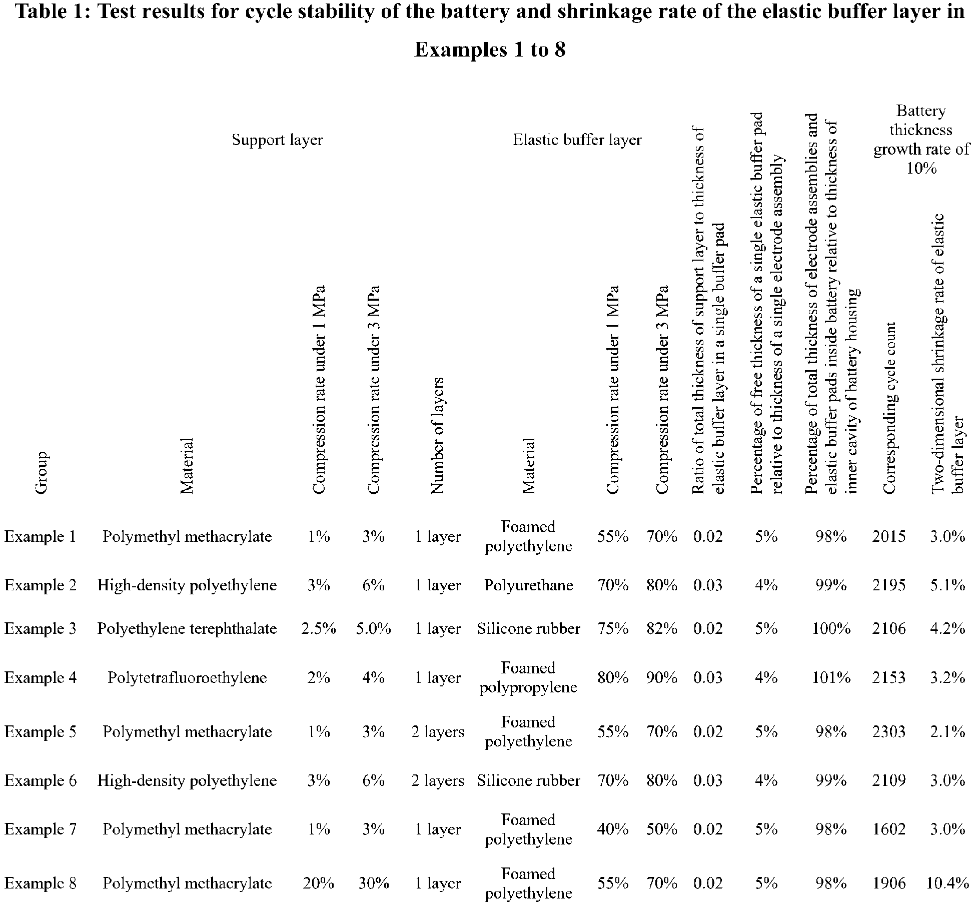

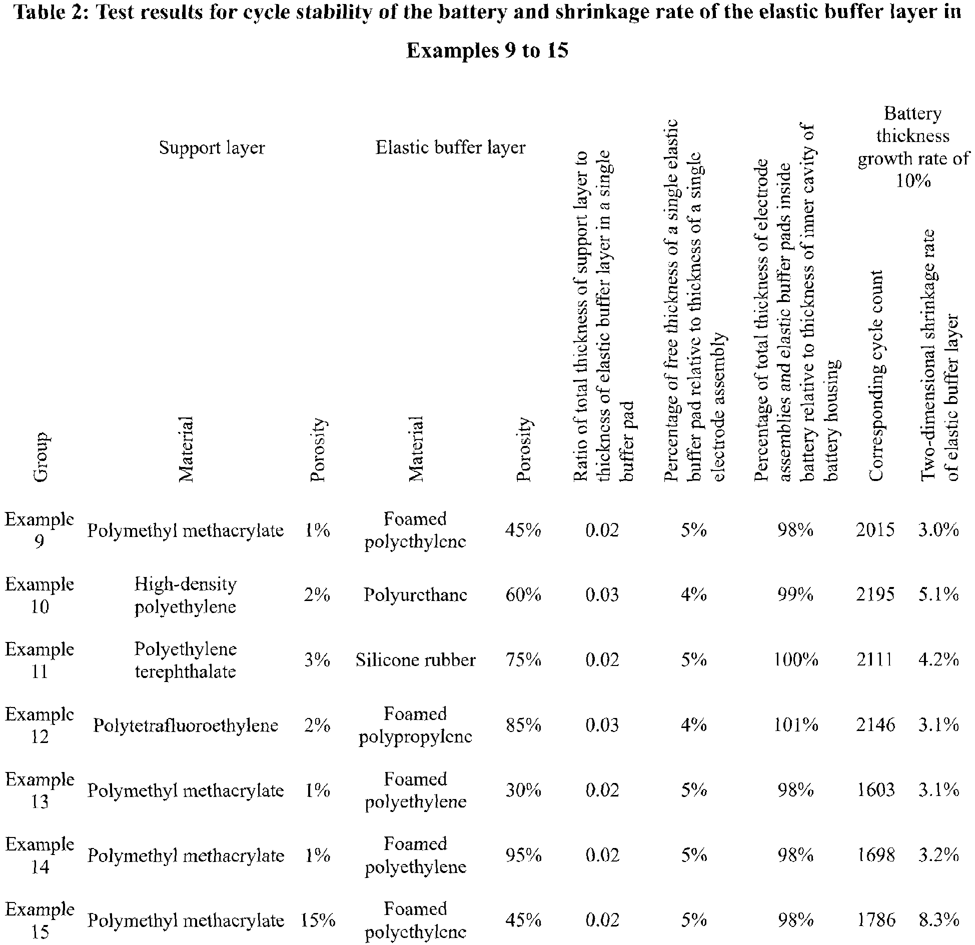

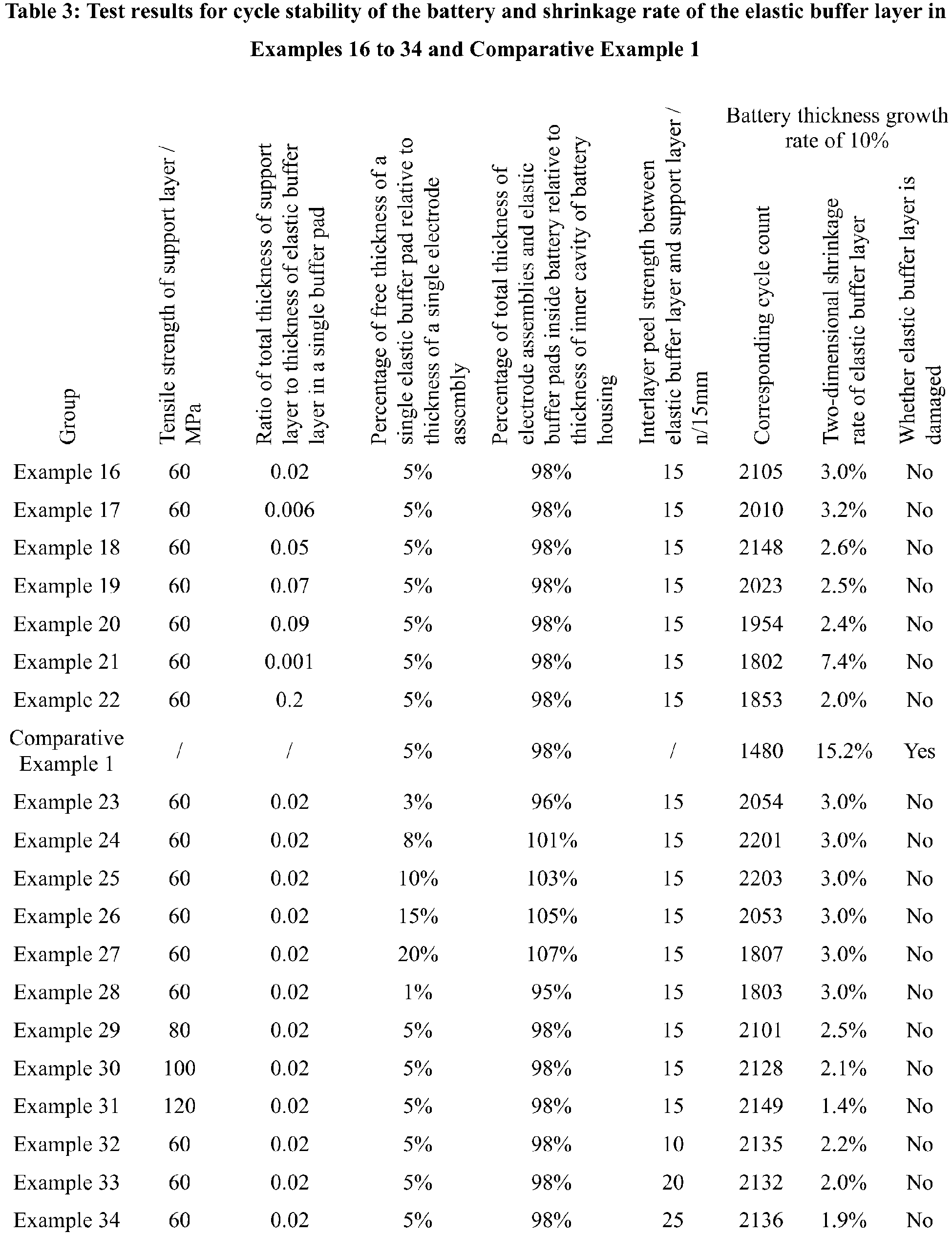

### Results and conclusions:

From Examples 1 to 34 and Comparative Example 1, it can be seen that incorporating a support layer structure in the elastic buffer pad to fix and support the elastic buffer layer is conducive to improving the cycle stability of the battery and reducing the shrinkage rate of the elastic buffer layer in the two-dimensional direction during battery preparation and cycling. Additionally, from Examples 1 to 8 and Examples 9 to 15, it is evident that the compression rate or porosity of the support layer affects the shrinkage rate of the elastic buffer layer in the two-dimensional direction perpendicular to its thickness direction. When the compression rate of the support layer is higher or its porosity is greater, the effect of reducing the shrinkage rate of the elastic buffer layer in the two-dimensional direction diminishes. The reason may be that, under such conditions, the support layer undergoes greater deformation in the two-dimensional direction when subjected to stress, such as the tensile force of the elastic buffer layer, reducing its ability to suppress deformation of the elastic buffer layer in the two-dimensional direction, resulting in a relatively higher thermal shrinkage rate of the elastic buffer layer during the vacuum baking process. Furthermore, the compression rate or porosity of the elastic buffer layer affects the volume stability of the battery during long-term use. When the compression rate or porosity of the elastic buffer layer is lower, the effect of reducing the volume expansion of the battery cell during cycling diminishes. The reason may be that, under such conditions, the compression rate of the elastic buffer layer under compressive stress is relatively low, resulting in a relatively lower ability to absorb the volume expansion of the battery cell during long-term cycling, leading to fewer cycles corresponding to a specific volume expansion. From Examples 16 to 34, it can be seen that further adjusting the ratio of the thickness of the support layer to the thickness of the elastic buffer layer, the thickness proportion of the elastic buffer pad and electrode assemblies inside the battery housing, the thickness ratio of the elastic buffer pad to the electrode assemblies, the tensile strength of the support layer, and the interlayer peel strength between the elastic buffer layer and the support layer can also influence the volume stability of the battery during cycling and the deformation of the elastic buffer layer in the two-dimensional direction. In the design and preparation of the battery, one or more of the above features can be optimized to further improve the cycle stability of the battery.

Finally, it should be noted that: the above embodiments are only used to illustrate the technical solutions of the present application and are not intended to limit it; although the present application has been described in detail with reference to the foregoing embodiments, those of ordinary skill in the art should understand that: they can still modify the technical solutions described in the foregoing embodiments, or make equivalent replacements for some or all of the technical features; and these modifications or replacements do not make the essence of the corresponding technical solutions depart from the scope of the technical solutions of the embodiments of the present application, and they should all be included within the scope of the claims and specification of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A battery cell comprising:
a housing;
at least one electrode assembly, the electrode assembly being disposed within the housing; and
at least one elastic buffer pad, the elastic buffer pad comprising an elastic buffer layer and a support layer disposed on at least one side of the elastic buffer layer, the support layer being configured to support the elastic buffer layer; and the elastic buffer pad being disposed between the electrode assembly and the housing, and/or between two adjacent electrode assemblies.

2. The battery cell according to claim 1, wherein the battery cell satisfies at least one of the following conditions:
under a same pressure, a compression rate of the elastic buffer layer is greater than a compression rate of the support layer;
a porosity of the elastic buffer layer is greater than a porosity of the support layer; and
an elastic modulus of the elastic buffer layer is less than an elastic modulus of the support layer.

3. The battery cell according to claim 1 or 2, wherein the compression rate of the elastic buffer layer under 1 MPa pressure is 50% to 90%, optionally 60% to 80%; and the compression rate of the support layer under 1 MPa pressure is less than or equal to 5%.

4. The battery cell according to any one of claims 1 to 3, wherein the compression rate of the elastic buffer layer under 3 MPa pressure is 60% to 95%, optionally 80% to 95%; and the compression rate of the support layer under 3 MPa pressure is less than or equal to 8%.

5. The battery cell according to any one of claims 1 to 4, wherein the porosity of the elastic buffer layer is 40% to 95%, optionally 55% to 90%, and further optionally 70% to 85%; and/or, the porosity of the support layer is less than or equal to 5%.

6. The battery cell according to any one of claims 1 to 5, wherein the elastic buffer layer comprises at least one of foamed polyethylene, polypropylene, polyurethane, and silicone rubber; and/or the support layer comprises at least one of high-density polyethylene, polymethyl methacrylate, polyethylene terephthalate, and polytetrafluoroethylene.

7. The battery cell according to any one of claims 1 to 6, wherein at least one elastic buffer pad comprises one elastic buffer layer and one support layer; and/or at least one elastic buffer pad comprises one elastic buffer layer and two support layers, the elastic buffer layer being sandwiched between the two support layers.

8. The battery cell according to any one of claims 1 to 7, wherein a thickness of the elastic buffer layer is greater than a thickness of the support layer.

9. The battery cell according to any one of claims 1 to 8, wherein, in a single elastic buffer pad, a ratio of a total thickness of the support layer to a free thickness of the elastic buffer layer is 0.005 to 0.1, optionally 0.02 to 0.05.

10. The battery cell according to any one of claims 1 to 9, wherein the free thickness of the elastic buffer layer is 0.2 mm to 10 mm, and a thickness of a single support layer is 30 µm to 200 µm.

11. The battery cell according to any one of claims 1 to 10, wherein a free thickness of a single elastic buffer pad is 2% to 15% of a thickness of a single electrode assembly, optionally 5% to 10% of the thickness of a single electrode assembly.

12. The battery cell according to any one of claims 1 to 11, wherein a sum of thicknesses of all the electrode assemblies and free thicknesses of all the elastic buffer pads is 96% to 105% of a thickness of an inner cavity of the housing, optionally 98% to 103% of the thickness of the inner cavity of the housing.

13. The battery cell according to any one of claims 1 to 12, wherein the elastic buffer layer is adhesively connected to the support layer.

14. The battery cell according to any one of claims 1 to 13, wherein an interlayer peel strength between the elastic buffer layer and the support layer is greater than or equal to 10 N/15 mm, optionally greater than or equal to 20 N/15 mm.

15. The battery cell according to any one of claims 1 to 14, wherein a tensile strength of the support layer is greater than or equal to 20 MPa, optionally greater than or equal to 50 MPa.

16. The battery cell according to any one of claims 1 to 15, wherein, in the elastic buffer pad disposed between the electrode assembly and the housing, a thermal conductivity of the elastic buffer layer and/or the support layer is greater than or equal to 10 W/(m·°C),optionally greater than or equal to 20 W/(m·°C).

17. The battery cell according to any one of claims 1 to 16, wherein, in the elastic buffer pad disposed between two adjacent electrode assemblies, the thermal conductivity of the elastic buffer layer and/or the support layer is less than or equal to 0.1 W/(m·°C), optionally less than or equal to 0.05 W/(m·°C).

18. The battery cell according to any one of claims 1 to 17, wherein the elastic buffer pad is disposed between two adjacent electrode assemblies.

19. The battery cell according to any one of claims 1 to 18, wherein the housing is a prismatic housing, and the electrode assembly is a wound electrode assembly.

20. A battery comprising the battery cell according to any one of claims 1 to 19.

21. An electric apparatus comprising the battery according to claim 20.
